**Europäisches Patentamt**

**European Patent Office**

**Office européen des brevets**

(19)

(11) Veröffentlichungsnummer: **0 067 300**

**A2**

(12) EUROPÄISCHE PATENTANMELDUNG

(21) Anmeldenummer: 82103799.1

(22) Anmeldetag: 04.05.82

(51) Int. Cl.³: **B 01 D 17/02**
C 02 F 1/40

(30) Priorität: 11.06.81 DE 8117259 U

(43) Veröffentlichungstag der Anmeldung:
22.12.82 Patentblatt 82/51

(84) Benannte Vertragsstaaten:
AT CH DE FR IT LI NL

(71) Anmelder: Passavant-Werke AG & Co. KG

D-6209 Aarbergen 7(DE)

(72) Erfinder: Fiedler, Siegfried
Gartenstrasse 1
D-5409 Bremberg(DE)

(54) Vorrichtung zur Flüssig-Flüssig-Trennung.

(57) Dieser Koaleszenzfilter für die Flüssig-Flüssig-Trennung enthält eine von unten nach oben durchströmte Filtermasse. Die koalierte Leichtflüssigkeit sammelt sich als Schwimmschicht an der über der Filtermasse liegenden Oberfläche. Die Filtermasse besteht erfindungsgemäß aus übereinandergelegten Siebgewebezuschnitten, deren Maschenweite von unten nach oben zunimmt. Zur gleichmäßigen Beaufschlagung der Filtermasse ist ein unterer Einlaufverteiler vorgesehen, der aus mehreren ineinandergeschachtelten Trichtern mit unterschiedlichem Öffnungswinkel besteht.

EP 0 067 300 A2

Croydon Printing Company Ltd.

G 1144

Beschreibung

Die Neuerung betrifft eine Vorrichtung zur Flüssig-Flüssig-Trennung, insbesondere zum Abscheiden von in Abwasser dispergierten Kohlenwasserstoffen.

Mit Kohlenwasserstoffen, insbesondere Benzin oder Öl verschmutzte Abwässer werden in Schwerkraftanscheidern gereinigt, in denen die Leichtflüssigkeitströpfchen infolge Verlangsamung der Fließgeschwindigkeit aufsteigen können. Wenn die Leichtflüssigkeitströpfchen eine gewisse Tröpfchengröße unterschreiten, dann reicht die Aufenthaltszeit wegen der geringen Aufstiegsgeschwindigkeit nicht mehr aus; die dispegierten Tröpfchen verlassen den Abscheider mit dem Abwasser.

Da der Anteil der Restverschmutzung über dem zulässigen Wert liegen kann, hat man den Schwerkraftabscheidern u.a. sogenannte Koaleszenzfilter nachgeschaltet. Diese enthalten eine von dem Abwasser zu durchströmende Filterfüllung, deren Wirkung darin besteht, daß die Tröpfchen auf dem durch die Einbauten verlängerten Weg von Wandflächen des Filters vorübergehend so lange festgehalten werden, bis die durch Hinzukommen weiterer Tröpfchen eine solche Größe erreicht haben, daß sie schnell nach oben steigen. Verbesserungen des Koaleszenzeffektes können demnach dadurch erreicht werden, daß man den Weg des Abwassers verlängert und gleichzeitig dafür sorgt, daß die koalierten Tropfen ungehindert aufsteigen.

Diese Aufgabe wird gemäß der vorliegenden Neuerung dadurch gelöst, daß der Koaleszenzfilter aus einem Paket von übereinandergelegten Siebgewebezuschnitten besteht. Derartige Siebgewebe haben den Vorteil, daß sie Handelsware sind. Aus dem großen Angebot verschiedenster Maschenweiten und -formen

- 2 -

kann das für den jeweiligen Anwendungsfall geeignetste Material ausgewählt werden. Außerdem kann auch die Höhe des Filters beliebig variiert werden, was sogar noch während des Betriebs durch Einlegen oder Fortnehmen von Zuschnitten möglich ist. Die Reinigung des Filters gestaltet sich ebenfalls sehr einfach. Sie kann mit Dampfstrahlgeräten erfolgen.

Vorzugsweise werden Siebgewebe mit unterschiedlicher, und zwar von unten nach oben steigender Maschenweite verwendet. Dadurch ist auf der einen Seite sichergestellt, daß die Maschen übereinanderliegender Siebzuschnitte gegeneinander versetzt sind, so daß sich keine Röhren bilden können. Auf der anderen Seite finden die Tröpfchen, die eine zum Aufsteigen ausreichende Größe erreicht haben und sich ablösen, einen hindernisarmen Weg vor, so daß sie schnell aufsteigen.

Mindestens ebenso wichtig wie die optimalen Koaleszenzbedingungen ist es, das Abwasser vor Eintritt in den Filter gleichmäßig über die verfügbare Fläche zu verteilen. Dies geschieht gemäß der Neuerung durch einen Einlaufverteiler, der aus mehreren ineinandergeschachtelten Trichtern mit unterschiedlichen, nach oben gerichteten Öffnungswinkeln besteht. Dieser Verteiler sorgt für eine wirbelfreie, anteilige Auffächerung des Zulaufs, so daß alle Teile des Filters gleich hoch beaufschlagt sind.

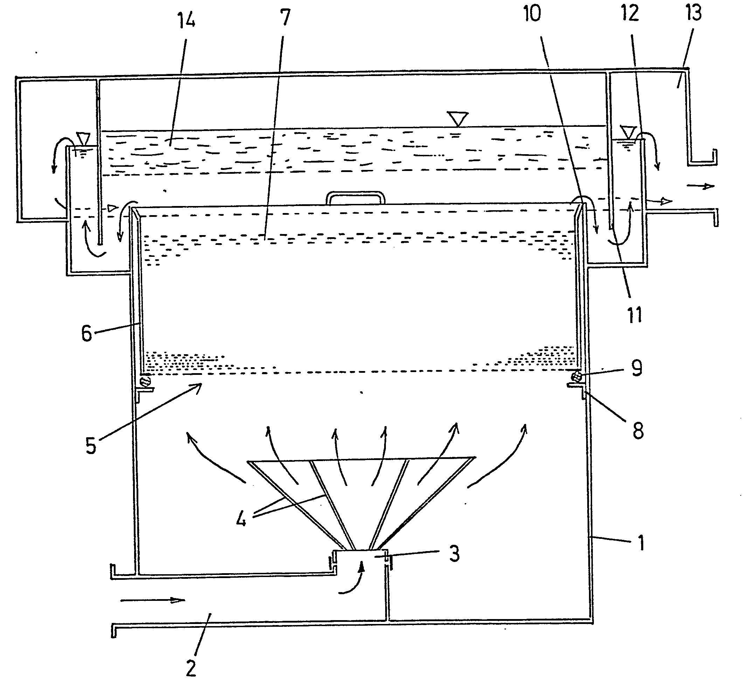

Die neue Vorrichtung ist in der Zeichnung schematisch im Vertikalschnitt dargestellt. Das einen runden oder rechteckigen Querschnitt aufweisende Gehäuse 1 besitzt unten einen Seitenzulauf 2, der eine vertikal nach oben gerichtete Austrittsöffnung 3 aufweist. Auf diese ist eine aus mehreren Trichtern 4 bestehende Verteilvorrichtung aufgesetzt, die den Zulaufstrom in flächengleiche Anteile aufteilt.

- 3 -

Der Koaleszenzfilter 5 besteht aus einem Korb 6 mit Siebboden, in den die Siebgewebezuschnitte 7 lagenweise eingelegt sind. Der Korb 6 stützt sich auf einem rund umlaufenden Rand 8 ab, auf dem ein Dichtring 9 liegt, der verhindert, daß Abwasser die Filterfüllung umgeht.

Das gereinigte Wasser gelangt über eine Überlaufkante 10 und unter einer Tauchwand 11 hindurch zu einer Überfallschwelle 2, die den Flüssigkeitsspiegel im Gehäuse hält. Das gereinigte Wasser fließt durch das Auslaufbauwerk 13 ab, während sich die Leichtflüssigkeit als Schwimmschicht 14 an der Flüssigkeitsoberfläche sammelt, von wo sie kontinuierlich oder diskontinuierlich abgezogen werden kann.

Aarbergen 7, den 21. Mai 1981
BK/Di

G 1144

Passavant-Werke AG & Co. KG

6209 Aarbergen 7

Bezeichnung

Vorrichtung zur Flüssig-Flüssig-Trennung

Schutzansprüche

1. Vorrichtung zur Flüssig-Flüssig-Trennung, insbesondere zum Abscheiden von in Abwasser dispergierten Kohlenwasserstoffen, mit einem von unten nach oben durchströmten Koaleszenzfilter und einem über dem Koaleszenzfilter liegenden freien Flüssigkeitsspiegel, an dem sich die koalierte leichtere Flüssigkeit sammelt, wobei der Ablauf für die gereinigte Flüssigkeit seitlich zwischen der Oberseite des Koaleszenzfilters und der Schwimmschicht liegt, dadurch gekennzeichnet, daß der Koaleszenzfilter (5) aus einem Paket von übereinandergelegten Siebgewebezuschnitten (7) besteht.

2. Vorrichtung nach Anspruch 1, dadurch gekennzeichnet, daß die Maschenweite der Siebgewebezuschnitte (7) von unten nach oben zunimmt.

/2

0067300

- 2 -

3. Vorrichtung nach Anspruch 1 od. 2, <u>dadurch gekennzeich-</u>
   <u>net</u>, daß unterhalb des Koaleszenzfilters (5) ein Einlaufverteiler (4) vorgesehen ist.

4. Vorrichtung nach Anspruch 3, <u>dadurch gekennzeichnet</u>,
   daß der Einlaufverteiler aus mehreren ineinandergeschachtelten Trichtern mit unterschiedlichem Öffnungswinkel besteht.

5. Vorrichtung nach Anspruch 1 od. 2, <u>dadurch gekennzeich-</u>
   <u>net</u>, daß die Siebgewebezuschnitte (7) in einen herausnehmbaren Korb (6) od.dgl. eingelegt sind, dessen unterer
   Rand gegen die Wand der Vorrichtung abgedichtet ist.

Aarbergen 7, den 21. Mai 1981
BK/Di

0067300

G 1144